# EUROPEAN PATENT APPLICATION

(11) **EP 2 624 396 A2**
(43) Date of publication of application: **07.08.2013**
(21) Application number: 13152849.9
(22) Date of filing: 28.01.2013
(51) Int. Cl.: H02H 1/00, H02H 7/04

(54) **Arc control in a fuse protected system**

(30) Priority: 31.01.2012 IN CH03622012
(71) Applicant: General Electric Company, Schenectady, New York 12345 (US)
(72) Inventor: Thangavelu, Asokan, 560066 Karnataka (IN); Valdes, Marcelo Esteban, Plainville, CT Connecticut 06062 (US); Roscoe, George William, Atlanta, GA Georgia 30339 (US)
(74) Representative: Picker, Madeline Margaret

(57) **Abstract**

An arc control assembly is disclosed. In accordance with certain aspects of the disclosure, a controller 20 is provided that detects the presence of a fault condition on a secondary side of a transformer 12. Upon detecting such a fault condition, the controller causes a discharge or short condition to be generated on a primary side of the transformer.

## Description

### BACKGROUND

The subject matter disclosed herein relates to elimination or reduction of arcing in electrical systems that include a transformer.

An electrical distribution system, such as an electrical grid, may be used to distribute electricity over a region or within a facility, such as from upstream power generation facilities or take up points to one or more downstream users or distributors of the electricity. At various points within such a grid, electricity may be provided at a higher voltage at an upstream location but at a lower voltage for the downstream user or distributor. For example, a transformer (such as a distribution or secondary substation transformer) may be employed to transform electrical power at a distribution voltage (e.g., 11kV-38kV) to a utilization voltage (e.g., 208V to 7kV).

In some instances, accidental contacts or short circuits may occur that can result in an arc fault current (e.g., an air discharge event). For example, in an arc flash event, an arcing fault may occur between a phase bus bar and another bus bar or a neutral or ground site. In such an arc flash event, the provided protective devices may not trip as quickly as desired, particularly if the fault occurs at a secondary, lower, voltage, where the protective device is on the primary side of the transformer. For example, several seconds or minutes may pass before a protective device trips in situations where the fault current above the transformer is similar to what is observed during a transformer inrush (i.e., the initial current drawn by the transformer when a device powers up). Typically protective devices used ahead of transformers, such as fuses, are selected or configured to not trip during such inrush events as these events are part of normal operation. As a result, undesired arc fault currents may not be stopped as quickly as desired.

### BRIEF DESCRIPTION

In accordance with one embodiment, an electrical system is provided. The electrical system comprises a primary circuit at a first voltage. The primary circuit comprises at least one circuit interrupt device. The electrical system further comprises a secondary circuit at a second voltage. The second voltage is less than or equal to the first voltage. The electrical system further comprises a transformer configured to transfer electrical energy from the primary circuit to the secondary circuit. The electrical system further comprises a controller device configured to detect a fault condition on the secondary circuit and a fault generation device configured to generate a discharge or short on the primary circuit when the controller device detects the fault condition on the secondary circuit.

In accordance with a further embodiment, a fault protection assembly is provided. The fault protection assembly comprises a controller configured to detect an arc event on a secondary circuit and to generate a signal in response to the arc event. The fault protection assembly further comprises a fault generation device configured to receive the signal and to generate a discharge or short on a primary circuit in response to the signal. The primary circuit is at an equal or higher voltage than the secondary circuit. In accordance with an additional assembly, a method for controlling electrical arcs is provided. In accordance with this method, an arc flash is detected on a secondary circuit at a first voltage. A signal is generated in response to the arc flash. A discharge or short is generated on a primary circuit in response to the signal. The primary circuit is at an equal or higher voltage than the secondary circuit. The flow of electrical energy is stopped on the primary circuit and the secondary circuit in response to the discharge or short on the primary circuit.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of components in an electrical system in accordance with aspects of the present disclosure;
FIG. 2 is a partial circuit view of an embodiment of a system, in accordance with aspects of the present disclosure;
FIG. 3 is a partial circuit view of a further embodiment of a system, in accordance with aspects of the present disclosure; and
FIG. 4 is a visual representation of an implementation of an embodiment of a system, in accordance with aspects of the present disclosure.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be non-limiting, and thus additional numerical values, ranges, and percentages are within the scope of the disclosed embodiments.

In various embodiments of the present approach, first and second electrical systems are coupled by a transformer that transmits power from the first (i.e., primary) system (at a higher or equal voltage) to the second (i.e., secondary) systems (at lower or equal voltage). The present disclosure generally relates to shortening the time between an arc (or other) fault event in the secondary system and fuse interruption of the flowing current in the primary system. While the present disclosure generally discusses faults events in the secondary system as being arc faults, such discussion is intended to simplify explanation and to provide particular examples. The present approach is equally applicable to other types of fault events in the secondary system (such as bolted faults) and should be understood as encompassing, and protecting against, various types of shorts or discharges that may occur in the secondary system. As discussed herein, in certain implementations of the present approach, a short or discharge on the source or higher voltage side (i.e., the first or primary side) of a transformer may be triggered in order to provoke such a fuse interruption (i.e., blowing of a fuse). For example, in one embodiment a low impedance controlled fault is introduced under a set of fuses feeding a power distribution circuit. In such an embodiment, the resulting high fault current would melt (i.e., trip) the fuses on the primary side of the transformer, interrupting the circuit. In particular, the fault current may be effectively transferred from an uncontrolled accidental fault on the lower voltage side (i.e., the second or secondary side) of the transformer to a controlled fault on the primary side of the transformer, thereby extinguishing the accidental fault. Once the energy is transferred to the primary side of the transformer, the current flow is of sufficient magnitude to melt the fuses quickly, thereby stopping current flow on both sides of the transformer. In one such implementation, an arcing device may be provided below fuses on the primary side of the transformer and used to transfer energy away from an accidental arc on the secondary side of the transformer.

As will be appreciated, generation of a discharge or arc event on the primary side of the transformer in response to an arcing fault being detected on the secondary side of the transformer may be effectively "throttle" the arc fault on the secondary side of the transformer. In particular, the arc fault in the secondary system may be effectively extinguished by the transformer's impedance and by the transformer's reduction in voltage (if any) across the primary and secondary systems. Furthermore, the discharge or short stops power flowing in the secondary (i.e., downstream) system but allows power to continue flowing through the overcurrent protective devices on the primary or upstream side of the transformer and acts to increase that power flow to a level that represents a significant fault within the primary system, thereby tripping or blowing the protective devices, as described herein.

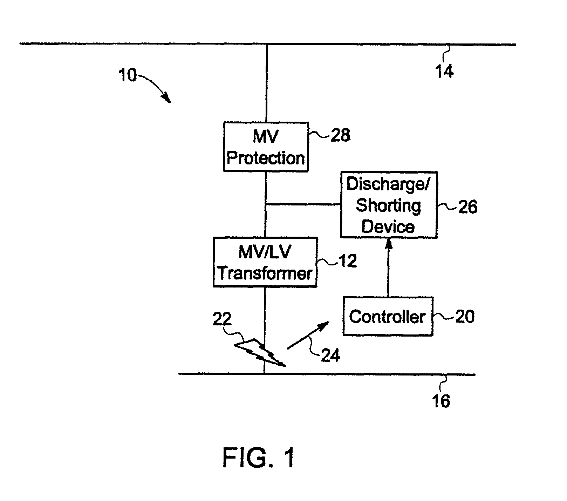

With the foregoing in mind, and turning to FIG. 1, certain embodiments of the present disclosure consist of an electrical system 10 having two parts that are used to protect an electrical equipment line-up protected across a transformer 12 (e.g., a system protected by a fuse). The transformer 12 can be a DY transformer or any other suitable configuration, including 1-phase or 3-phase. In one embodiment, the transformer 12 connects a medium voltage (MV) line 14 (e.g., a 17.5kV, 13.8kV, 11kV, or 5kV, line) on the primary side of the transformer 12 and a low voltage (LV) line 16 (e.g., a 240V, 480V, 600V, 2.3kV, 4.16kV, 6.6 kV, or 11kV, line) on the secondary side of the transformer 12 which is at a voltage equal to or lower than the MV line 14. The first part of the system is a controller system 20 that detects and/or determines if an electrical arc 22 is present in a piece of equipment on the secondary side of the transformer 12. The controller system 20 may make such a determination based on various types of observable phenomena 24 or indicators, such as current, light, light and current, voltage, sound, pressure or pressure changes, and so forth.

The controller 20 may be one of several types of controlling devices. For example, the controller 20 may be one or more of an arc flash relay, 87B, 87T, or any suitable over-current trip or relay. For example, in one embodiment, the controller 20 may be (or may be based on) an Entelliguard® TU trip unit (available from General Electric) offering selective control, rapid override control, and/or zone selectivity.

Once the controller system 20 determines that an electrical arc 22 is present on the secondary side of the transformer 12, the controller system 20 sends a signal to an upstream device (in the present example, depicted as a discharge/shorting device 26) to create an electrical short on the primary side of the transformer 12. The electrical short (low-impedance fault) may be created by use of a mechanical crowbar, an electrical equipment short closed by an automatic switch, an arc containment device, or creation of a low impedance fault by a variety of means, or other suitable approaches. In one embodiment, the discharge/shorting device 26 generates a short between internal electrodes, starting an arc within itself, causing the arc on the secondary side of the transformer 12 to be extinguished quickly due to power being diverted to the new, purposely generated arc event on the primary side of the transformer 12.

The resulting short created by the discharge/shorting device 26 accelerates implementation or action of a protection device 28 on the primary side of the transformer 12, such as the blowing of a fuse protecting the system 10, thereby limiting the maximum current flow. In effect, the disclosed approaches act in response to an arc event or accidental discharge on the secondary side (e.g., LV side) of the transformer 12 to create a corresponding event on the primary side (e.g., MV side) of the transformer 12 (i.e., to "transfer" the fault event to the primary side of the transformer 12), causing the current limiting protections 28 on the primary side to act and thereby limiting the flow of current and disrupting the discharge event.

While a fuse of fused switch is one possible embodiment of a protection device 28 suitable for use in accordance with the present disclosure, the protection device 28 may be any suitable circuit protection device. For example, the protection device 28 may, alternatively, be a circuit breaker. In such an implementation, the discharge/shorting device 26 would be configured to provide sufficient withstand capability to carry current until a command is received at the circuit breaker to trip (such as from the internal sensing mechanisms of the circuit breaker or from the controller 20). The additional withstand capability accommodates the extra time required for the circuit breaker to receive the signal, react to the signal and interrupt current flow. Such additional withstand capability may increase the size, complexity, and/or cost of the device 26, but might also be suitable for use in a wider range of applications. Thus, selection and/or configuration of the protection device 28 may depend on the particular application or other system specific factors.

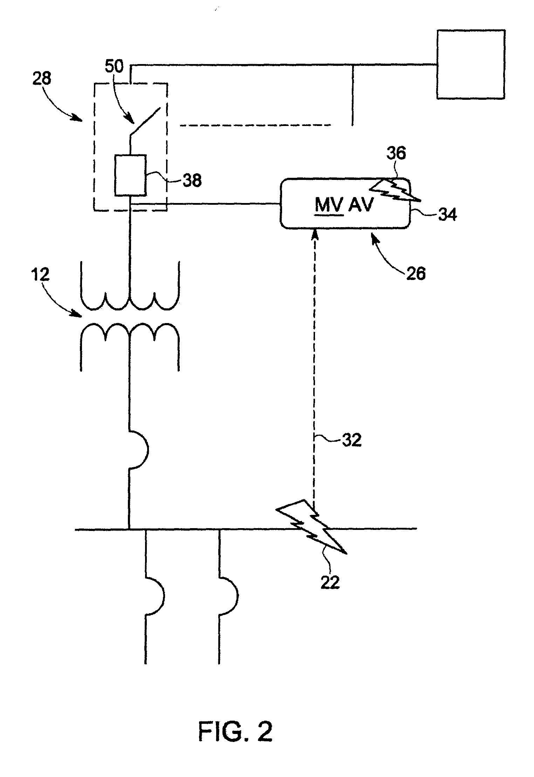

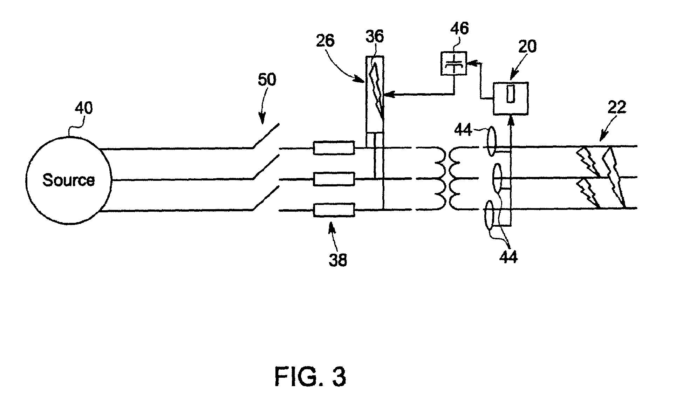

Turning to FIG. 2, a partial circuit view of one such implementation is depicted. While FIG. 2 generally depicts respective connections in single-line form to simplify explanation and depiction, it should be appreciated that the depicted circuit may be applicable to three-phase (as shown in FIG. 3) as well as single-phase power implementations. In this example, the controller detects a discharge or arc 22 and generates a signal 32 to a discharge/shorting device 26, such as MV arc Vault (AV) 34, that acts to functionally transfer the fault from the secondary side of the transformer 21 to the primary side, such as by generating a corresponding discharge 36 on the primary side between the transformer 12 and the fuse 38 (shown as part of a fused switch assembly in FIG. 2). The fault on the primary side of the transformer results in a fuse 38 (shown with switch assembly 50) being blown out more quickly than the fuse 38 would be blown out by the discharge 22 on the secondary side of the transformer 12. The fuse 38 thus acts to limit the primary arcing energy in the MV AV 34.

A further implementation more clearly depicting a three-phase embodiment and additional sensing components is provided in FIG. 3. In the depicted embodiment a generic source 40 of electricity is depicted on the primary side of transformer 12. As will be appreciated, the source 40 may be at any voltage that is higher or equal to the secondary voltage on the other side of the transformer 12. In certain implementations, the source 40 delivers sufficient fault current to blow fuses 38 quickly when an arcing fault occurs between the fuses 38 and the transformer 12. With respect to the timing of an arc limiting operation in accordance with the present disclosure, in one embodiment it is estimated that containment may be completed and an arc flash on the LV side eliminated in approximately 8 ms or less (e.g., between 2 ms - 4 ms). It is estimated that current flow would be stopped on the primary side of the transformer 12 (i.e., fuse 38 would be blown) within approximately 1 cycle (e.g., within ∼3/4 cycle) of the flash arc on the secondary side of the transformer 12.

The controller 20 may be any suitable controlling and/or detecting technology and, in certain embodiments, may receive and process signals from one or more sensors 44. For example, the sensors 44 may generate signals in response to one or more of light, current, voltage, pressure, noise, or other observable phenomena and may transmit these signals to the controller 20 for processing or monitoring.

In the depicted example, the controller communicates with a discharge/shorting component 26 of some type, such as a polarized capacitor 46, capable of causing a discharge event 36 between the transformer 12 and the fuses 38 and upstream switch 50. In the depicted example, the discharge event is generated in conjunction with a discharge/shorting device 26 (such as a mechanical crowbar having 0 impedance or an arc generating device) capable of causing a fuse blowing event on the primary side of the transformer 12 when activated. The discharge system 26 may be mounted external to the fused switch enclosure (and connected via suitable electrical conductors, such as cables, bus, or combinations of cables and bus) or may be mounted internal to the fused switch enclosure.

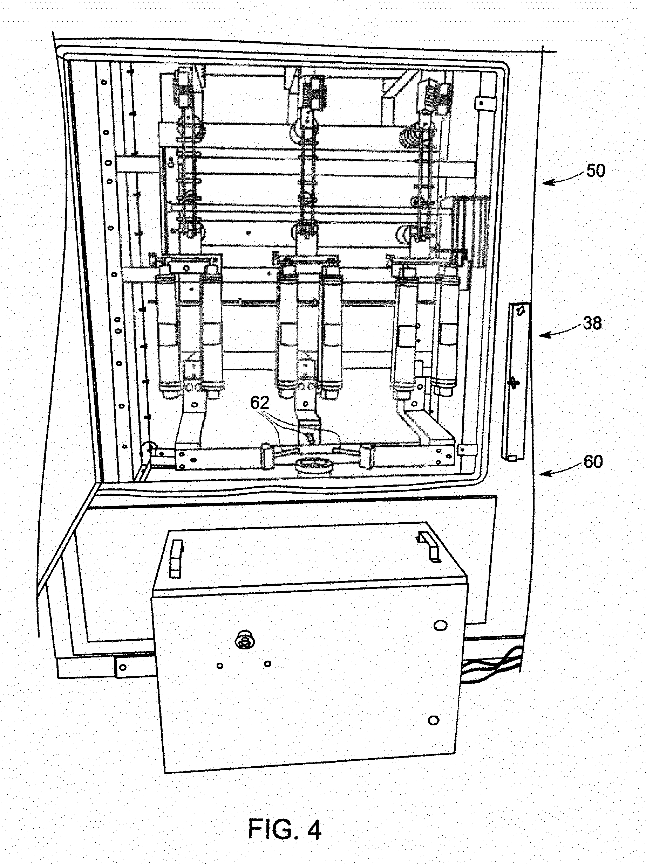

Turning to FIG. 4, In one embodiment, the discharge/shorting device 26 may be provided as a plasma trigger or gun 60 in which a capacitor stored energy device 46 dumps energy into electrodes 62 associated with the plasma gun to create an arc that is channeled by plasma geometry and materials into the space between the set of main electrodes 62 downstream of the fuses 38, thereby breaking down the air's dielectric properties and generating an arc event on the primary side of the transformer 12. For example, in one such embodiment the plasma trigger or gun 60 breaks down the dielectric (insulating) properties of the air between the electrodes 62 provided downstream of the fuses 38. In such an embodiment, the electrodes 62 are at system potential (i.e., at full system voltage). Therefore, when the air's insulating properties are broken down by the plasma gun 60 the electrodes 62 start conducting through the ionized air, further breaking down its insulating properties and cascading into a full blown electrical arc. Once the main electrodes 62 start conducting, the plasma gun 60 no longer needs to operate, hence its output pulse is of very short duration (e.g., micro-seconds to tenths of milliseconds). As will be appreciated, the range of suitable distances between the electrodes 62 may vary depending on other parameters of the system, such as voltage level on the primary side of the transformer 12, with greater electrode spacing typically associate with higher system voltage levels. Likewise, the greater the "basic insulation level" desired for the system, the larger the gap between the electrodes 62 will typically be.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An electrical system (10), comprising
a primary circuit at a first voltage, wherein the primary circuit comprises at least one circuit interrupt device;
a secondary circuit at a second voltage, wherein the second voltage is less than or equal to the first voltage;
a transformer (12) configured to transfer electrical energy from the primary circuit to the secondary circuit;
a controller device (20) configured to detect a fault condition on the secondary circuit;
a fault generation device (26) configured to generate a discharge or short on the primary circuit when the controller device detects the fault condition on the secondary circuit.

2. The electrical system of claim 1, wherein the first voltage is between about 5kV to about 38kV, and/or the second voltage is between about 208V to about 7kV.

3. The electrical system of claim 1 or claim 2, comprising one or more sensors (44) in communication with the controller device (20), wherein the one or more sensors are configured to detect at least one of current, voltage, light, pressure, or sound.

4. The electrical system of claim 1, 2 or 3, wherein the fault condition comprises an arc flash or bolted fault.

5. The electrical system of any preceding claim, wherein the fault generation device comprises a plasma gun assembly configured to generate an electrical arc between a plurality of electrodes between the transformer and the at least one circuit interrupt device.

6. The electrical system of any preceding claim, wherein the discharge or short is generated between the transformer and the at least one circuit interrupt device.

7. The electrical system of any preceding claim, wherein at least one circuit interrupt device comprises a fuse or an assembly comprising a fuse and a switch.

8. The electrical system of any preceding claim, wherein the first voltage is a medium voltage and the second voltage is low voltage.

9. The electrical system of any preceding claim, wherein the at least one circuit interrupt device is configured to stop the flow of electrical energy on the primary circuit when the fault generation device (26) generates the discharge or short on the primary circuit.

10. A fault protection assembly, comprising:
a controller (20) configured to detect an arc event on a secondary circuit and to generate a signal in response to the arc event;
a fault generation device (26) configured to receive the signal and to generate a discharge or short on a primary circuit in response to the signal, wherein the primary circuit is at an equal or higher voltage than the secondary circuit.

11. The fault protection assembly of claim 10, comprising a circuit interrupt device configured to stop the flow of electrical energy on the primary circuit and the secondary circuit in response to the discharge or short on the primary circuit.

12. The fault protection assembly of claim 10 or claim 11, comprising one or more sensors in communication with the controller (20), wherein the one or more sensors are configured to detect at least one of current, voltage, light, pressure, or sound.

13. The fault protection assembly of claim 10, 11 or 12, wherein the fault generation device (26) generates a second arc event between at least one circuit interrupt device on the primary circuit and a transformer (12) between the secondary circuit and the primary circuit.

14. A method for controlling electrical arcs, comprising:
detecting an arc flash on a secondary circuit;
generating a signal in response to the arc flash;
generating a discharge or short on a primary circuit in response to the signal, wherein the primary circuit is at an equal or higher voltage than the secondary circuit; and
stopping the flow of electrical energy on the secondary circuit in response to the discharge or short on the primary circuit.

15. The method of claim 16, wherein at least one of:
the discharge or short occurs between at least one circuit interrupt device on the primary circuit and a transformer connecting the secondary circuit and the primary circuit;
detecting the arc flash comprises detecting one or more of light, current, voltage, sound, or pressure associated with the arc flash;
wherein generating the discharge or short comprises generating an arc event on the primary circuit, and
stopping the flow of electrical energy on the primary circuit and the secondary circuit comprises blowing at least one fuse in response to the discharge or short.
